(19) Europäisches Patentamt
European Patent Office
Office européen des brevets

(11) **EP 1 923 936 A1**

(12) **EUROPEAN PATENT APPLICATION**
published in accordance with Art. 153(4) EPC


(43) Date of publication:
**21.05.2008 Bulletin 2008/21**

(21) Application number: **06782428.4**

(22) Date of filing: **07.08.2006**

(51) Int Cl.:
***H01M 4/52*** *(2006.01)* ***H01M 4/06*** *(2006.01)*
***H01M 6/06*** *(2006.01)*

(86) International application number:
**PCT/JP2006/315586**

(87) International publication number:
**WO 2007/020828 (22.02.2007 Gazette 2007/08)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.08.2005 JP 2005236289**



(71) Applicants:
- **MATSUSHITA ELECTRIC INDUSTRIAL CO., LTD.**
  **Osaka 571-8501 (JP)**
- **Sumitomo Metal Mining Co., Ltd.**
  **Tokyo 105-8716 (JP)**

(72) Inventors:
- **NOYA, Shigeto**
  **c/o Matsushita Electric Industries**
  **2-1-61 Ashiromi Chuo-ku Osaka 540-6207 (JP)**
- **OKADA, Tadaya**
  **Matsushita Electric Industrial Co**
  **2-1-61 Shiromi,Chuo-ku,Osaka 540-6207 (JP)**
- **ABE, Isao**
  **c/o Sumitomo Metal Mining Co,LTD**
  **Ehime 792-0002 (JP)**
- **SHIRAOKA, Minoru**
  **Sumitomo Metal Mining Co Ltd**
  **Ehime 792-0002 (JP)**

(74) Representative: **TBK-Patent**
**Bavariaring 4-6**
**80336 München (DE)**


(54) **ALKALINE DRY BATTERY**


(57) An alkaline dry battery including nickel oxyhydroxide and manganese dioxide as positive electrode active materials. The nickel oxyhydroxide is a solid solution including at least manganese and cobalt. The content of the manganese is $5.2\times10^{-2}$ to $7.5\times10^{-2}$ moles per mole of the nickel oxyhydroxide, and the content of the cobalt is $0.5\times10^{-2}$ to $2.0\times10^{-2}$ moles. The alkaline dry battery maintains excellent heavy-load discharge characteristics, exhibits suppressed polarization during heavy-load pulse discharge to improve the operational stability of digital devices, and has high reliability with respect to leakage resistance and safety under short-circuit conditions.


FIG. 1

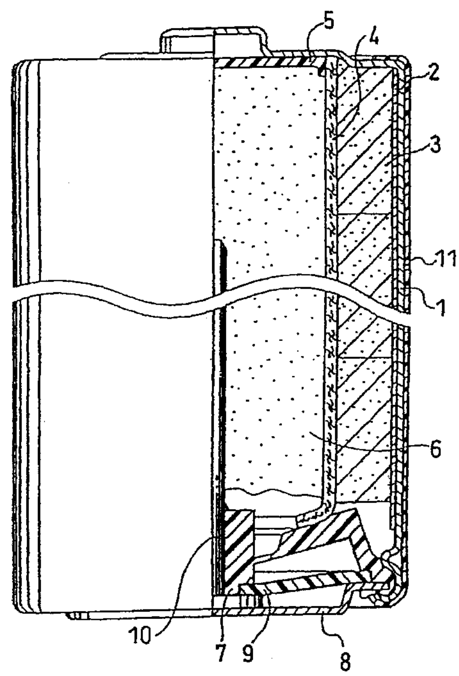


EP 1 923 936 A1

## Description

### Technical Field

The present invention relates to an alkaline dry battery including nickel oxyhydroxide and manganese dioxide as positive electrode active materials.

### Background Art

Alkaline manganese dry batteries have an inside-out structure. A cylindrical positive electrode mixture is placed in a positive electrode case serving as a positive electrode terminal, so as to closely adhere to the positive electrode case. A gelled negative electrode is placed in the central cavity of the positive electrode mixture with a separator interposed therebetween. With the recent proliferation of digital devices, the load power of such devices powered by batteries has been gradually increasing. Thus, there is a demand for batteries having excellent heavy-load discharge performance. To meet such demand, Patent Document 1 proposes mixing nickel oxyhydroxide to a positive electrode mixture to produce a battery that is excellent in heavy-load discharge characteristics. The battery proposed by Patent Document 1 has recently been put to practical use.

Alkaline batteries including nickel oxyhydroxide as a positive electrode active material have excellent heavy-load discharge characteristics, compared with conventional alkaline manganese dry batteries. They are thus becoming popular as the main power source for digital devices such as digital cameras. However, for example, digital cameras have various functions such as flashing a strobe light, putting in and out an optical lens, displaying by a liquid crystal display, and writing image data into a medium. Hence, batteries used as power sources need to instantaneously supply power at heavy load depending on various functions.

A problem with such batteries including nickel oxyhydroxide as a positive electrode active material is that their heavy-load discharge characteristics after storage at high temperatures are inferior to those of batteries not including nickel oxyhydroxide due to an increase in resistance between the positive electrode case and the positive electrode mixture, a decrease in dischargeable positive electrode active material, etc. To solve this problem, Patent Document 2 proposes the use of a solid solution of nickel oxyhydroxide including zinc as an active material, the addition of a zinc oxide to a positive electrode mixture, and the like.

Patent Document 1: Japanese Patent No. 3552194
Patent Document 2: Japanese Laid-Open Patent Publication No. 2002-075354

### Disclosure of Invention

### Problem To be Solved by the Invention

However, nickel hydroxide produced as a result of discharge is an insulator, and thus, after a certain amount of discharge, the battery proposed by Patent Document 1 becomes unable to instantaneously supply power at heavy load. That is, alkaline batteries including nickel oxyhydroxide exhibit greater polarization at the final stage of heavy-load pulse discharge than alkaline dry batteries. As a result, there are problems in that devices powered by such batteries have low operational stability. For example, in the case of a digital camera, the power source of the camera suddenly becomes dead during use.

Also, the battery proposed by Patent Document 2 exhibits large polarization during heavy-load pulse discharge. Further, when the battery becomes short-circuited, the temperature of the battery rises significantly, thereby posing practical problems such as possible battery explosion.

In view of the conventional problems as described above, an object of the present invention is to provide an alkaline dry battery that maintains excellent heavy-load discharge characteristics, exhibits suppressed polarization during heavy-load pulse discharge to improve the operational stability of digital devices, and has high reliability with respect to safety under short-circuit conditions.

### Means for Solving the Problem

The alkaline dry battery of the present invention includes: a positive electrode including at least nickel oxyhydroxide and manganese dioxide as positive electrode active materials; a negative electrode including zinc or a zinc alloy as a negative electrode active material; a separator interposed between the positive electrode and the negative electrode; a negative electrode current collector inserted in the negative electrode; and an alkaline electrolyte. The nickel oxyhydroxide is a solid solution including at least manganese and cobalt. The content of the manganese is $5.2\times10^{-2}$ to $7.5\times10^{-2}$ moles per mole of the nickel oxyhydroxide, and the content of the cobalt is $0.5\times10^{-2}$ to $2.0\times10^{-2}$ moles per mole of the nickel oxyhydroxide.

In particular, nickel contained in the nickel oxyhydroxide preferably has a mean valence of 2.95 or more and 3.05 or less.

Also, the nickel oxyhydroxide preferably has a mean particle size of 8 to 18 μm.

Further, the weight ratio of the nickel oxyhydroxide to the manganese dioxide included in the positive electrode is preferably 10:90 to 80:20.

Also, preferably, the nickel oxyhydroxide is a solid solution further including zinc, and the content of the zinc is $0.2\times10^{-2}$ to $2.0\times10^{-2}$ moles per mole of the nickel oxyhydroxide. In this case, a battery having improved heavy-load discharge characteristics after high-temperature storage can be obtained in a more reliable manner.

Also, the weight ratio of the nickel oxyhydroxide to the manganese dioxide included in the positive electrode is preferably 20:80 to 60:40. In this case, a battery having excellent heavy-load pulse characteristics and exhibiting a sufficiently suppressed increase in battery temperature upon a battery short-circuit can be obtained in a more reliable manner.

## Effects of the Invention

The present invention can provide a battery that maintains excellent heavy-load discharge characteristics, exhibits suppressed polarization during heavy-load pulse discharge to improve the operational stability of digital devices, and has high reliability with respect to leakage resistance and battery safety under short-circuit conditions.

## Brief Description of the Drawings

FIG. 1 is a partially cross-sectional front view of an alkaline dry battery in one embodiment of the present invention;
FIG. 2 is a powder X-ray diffraction pattern of nickel hydroxide particles;
FIG. 3 is a graph showing the relation between the ratio of nickel oxyhydroxide in an active material and the continuous discharge performance in the initial state;
FIG. 4 is a graph showing the relation between the ratio of nickel oxyhydroxide in an active material and the continuous discharge performance after storage;
FIG. 5 is a graph showing the relation between the ratio of nickel oxyhydroxide in an active material and the discharge performance in heavy-load pulse discharge; and
FIG. 6 is a graph showing the relation between the ratio of nickel oxyhydroxide in an active material and the highest battery temperature in a short-circuit test.

## Best Mode for Carrying Out the Invention

In view of the fact that the use of a solid solution of nickel oxyhydroxide including zinc as a positive electrode active material can provide an alkaline battery having excellent heavy-load continuous discharge characteristics in the initial state or after storage, the present inventors have conducted diligent research on the kinds and contents of elements that should be included in a solid solution of nickel oxyhydroxide serving as a positive electrode active material, in order to obtain an alkaline dry battery having characteristics suitable for use in digital devices such as digital cameras as well as excellent safety. As a result, they have completed the present invention.

The present inventors have made various examinations on solid solutions of nickel oxyhydroxide including the same amount of zinc, cobalt, or manganese per mole of the nickel oxyhydroxide. As a result, they have found the followings:

(1) The inclusion of zinc in a solid solution of nickel oxyhydroxide is effective for improving heavy-load continuous discharge at constant power and high-temperature storage characteristics. However, when the battery becomes short-circuited, the battery temperature rises sharply.
(2) The inclusion of cobalt in the solid solution is effective for improving pulse characteristics since polarization during heavy-load pulse discharge is reduced. However, in the same manner as in the inclusion of zinc, the battery temperature rises sharply in the event of a battery short-circuit. (3) The inclusion of manganese in the solid solution is effective for suppressing the rise in battery temperature in the event of a battery short-circuit since manganese improves the high-temperature storage characteristics most of these elements. However, polarization during heavy-load pulse discharge is promoted, thereby resulting in degradation of pulse characteristics.

Based on the above findings (1) to (3), the present inventors have studied the relation between the combination and contents of additional elements and the characteristics of alkaline dry batteries including a solid solution of nickel oxyhydroxide and manganese dioxide as positive electrode active materials. As a result, they have found that the use of a solid solution of nickel oxyhydroxide containing at least $5.2\times10^{-2}$ to $7.5\times10^{-2}$ moles of manganese and $0.5\times10^{2}$ to $2.0\times10^{-2}$ moles of cobalt per mole of nickel oxyhydroxide can provide a battery that maintains excellent heavy-load discharge characteristics, exhibits suppressed polarization during heavy-load pulse discharge to improve the operational stability of digital devices, and has high reliability with respect to safety under short-circuit conditions. In this way, they have completed the present invention.

Also, the solid solution of nickel oxyhydroxide further containing zinc at a zinc content of $0.2 \times 10^{-2}$ to $2.0 \times 10^{-2}$ moles per mole of nickel oxyhydroxide is preferable since the heavy-load discharge characteristics of the battery after high-temperature storage are improved.

In the present invention, provided that one or more kinds of atoms selected from the atom group consisting of manganese and cobalt (and zinc if necessary) contained in nickel oxyhydroxide are defined as Atom M, a solid solution of nickel oxyhydroxide containing Atom M refers to one in which Atom M is included in the crystal of nickel oxyhydroxide. Specifically, it may be either a solid solution in which at least part of the nickel atoms are replaced with Atom M in the crystal of nickel oxyhydroxide or a solid solution in which Atom M is inserted in the crystal of nickel oxyhydroxide. Of course, such a solid solution may contain replaced Atom M and inserted Atom M at the same time.

The content of elements in a solid solution of nickel oxyhydroxide can be determined by dissolving this solid solution, for example, in a nitric acid aqueous solution and subjecting it to an ICP emission spectrometry.

A solid solution of nickel oxyhydroxide used as a positive electrode active material can be obtained, for example, by applying a chemical oxidation treatment to a solid solution of nickel hydroxide. A method of such chemical oxidation treatment is, for example, placing a solid solution of nickel hydroxide into sodium hydroxide, adding a sodium hypochlorite aqueous solution thereto, and stirring.

A solid solution of nickel hydroxide used in the above process can be obtained, for example, as follows. Specifically, a nickel sulfate aqueous solution, a manganese sulfate aqueous solution, a cobalt sulfate aqueous solution, a zinc sulfate aqueous solution, a sodium hydroxide aqueous solution, and ammonia water are mixed together to prepare a suspension. From this suspension, the precipitate is separated by decantation, to obtain a solid solution of nickel hydroxide. The content of Atom M in the solid solution obtained is dependent on the concentrations of the manganese sulfate aqueous solution, the cobalt sulfate aqueous solution, and the zinc sulfate aqueous solution.

When the mean valence of nickel in the solid solution of nickel oxyhydroxide is less than 2.95 or exceeds 3.05, the heavy-load discharge characteristics of the battery degrade significantly. The mean valence of nickel in the solid solution of nickel oxyhydroxide of the present invention can be determined, for example, as follows. That is, first, the weight ratio "a" of nickel in the solid solution of nickel oxyhydroxide is determined by a gravimetric method (dimethylglyoxime method). Also, the amount "b" of nickel ions is obtained by dissolving the solid solution of nickel oxyhydroxide, for example, in nitric acid and performing an oxidation-reduction titration. From the weight ratio "a" of nickel and the amount "b" of nickel ions, the mean valence of nickel in the solid solution of nickel oxyhydroxide can be determined.

When the solid solution powder of nickel oxyhydroxide has a mean particle size of less than 8 $\mu$m, the loading property of such a positive electrode mixture degrades significantly and battery performance also degrade, which is not preferable. Also, when the particle size exceeds 18 $\mu$m, the contact with graphite particles serving as a conductive agent becomes poor. As a result, the heavy-load discharge characteristics in the initial state and high-temperature storage degrade significantly, which is not preferable.

Also, with respect to the mixing ratio of the solid solution of nickel oxyhydroxide and manganese dioxide, 10 to 80 % by weight of nickel oxyhydroxide and 90 to 20 % by weight of manganese dioxide are preferable since the discharge characteristics in the initial state and high-temperature storage are good. In particular, it is more preferable to adjust nickel oxyhydroxide to 20 to 60 % by weight and manganese dioxide to 80 to 40% by weight since the heavy-load pulse characteristics also become good and the increase in battery temperature in the event of a battery short-circuit is also fully suppressed.

In the present invention, the positive electrode can be made of conventionally known materials, and can include a positive electrode mixture that contains the above-mentioned mixture of a solid solution of nickel oxyhydroxide and manganese dioxide as positive electrode active materials, e.g., a graphite conductive agent, and an electrolyte.

Also, the negative electrode and the separator can also be made of conventionally known materials. The negative electrode can be, for example, a gelled negative electrode prepared by mixing a zinc or zinc alloy powder serving as a negative electrode active material, a sodium polyacrylate gelling agent, and an electrolyte. The zinc alloy powder can be, for example, a commercial product containing Bi, In, Al, etc. The electrolyte can be, for example, a potassium hydroxide aqueous solution. Also, the separator can be, for example, non-woven fabric composed of polyvinyl alcohol fiber, rayon fiber, etc.

FIG. 1 is a partially cross-sectional front view of an alkaline dry battery in one embodiment of the present invention. This alkaline dry battery includes positive electrode mixture pellets 3 and a gelled negative electrode 6, which are in contact with each other with a separator 4 interposed therebetween. A positive electrode case 1 is made of a nickel-plated steel plate. The positive electrode case 1 has a graphite coating film 2 on the inner face thereof.

The alkaline dry battery as illustrated in FIG. 1 can be produced as follows. That is, first, the positive electrode mixture pellets 3 in the form of a short cylinder are inserted into the positive electrode case 1. The positive electrode mixture pellets 3 are repressed in the positive electrode case 1, so that they closely adhere to the inner face of the positive electrode case 1. Subsequently, the separator 4 and an insulating cap 5 are inserted into the space inside the positive electrode mixture pellets 3, and an electrolyte is injected therein in order to moisten the separator 4 and the positive electrode mixture pellets 3. After the injection of the electrolyte, the gelled negative electrode 6 is filled in the space inside the separator 4. Next, a negative electrode current collector 10, which is integrated with a resin sealing plate 7, a bottom plate 8 serving as a negative electrode terminal, and an insulating washer 9, is inserted into the gelled negative electrode 6. The open edge of the positive electrode case 1 is crimped onto the circumference of the bottom plate 8 with the edge of the sealing plate 7 interposed therebetween, in order to seal the opening of the positive electrode case 1. Lastly, the outer surface of the positive electrode case 1 is covered with an outer label 11. In this way, an alkaline dry battery can be obtained.

Examples of the present invention are hereinafter described in detail. The features of the present invention are not limited to these Examples.

Example

<<Experimental Example 1>>

[Preparation of nickel hydroxide powder]

A solid solution powder of nickel hydroxide was prepared in the following manner. That is, first, 2.5 mol/liter of a nickel sulfate aqueous solution, 0.13 mol/liter of a manganese sulfate aqueous solution, 0.05 mol/liter of a cobalt sulfate aqueous solution, 5 mol/liter of a sodium hydroxide aqueous solution, and 5 mol/liter of ammonia water were supplied to a reactor. The reactor contained stirring blades and the temperature inside the reactor was maintained at 40°C. Each aqueous solution was continuously supplied into the reactor at a flow rate of 0.5 ml/min by using a pump.

When the pH inside the reactor became constant and the balance between the metal salt concentration and the metal hydroxide particle concentration became constant, i.e.,- when a steady state is reached, the suspension overflowing therefrom was collected. From this suspension, the precipitate was separated by decantation. The separated precipitate was treated with a sodium hydroxide aqueous solution with a pH of 13 to 14, so that anions such as sulfate ions in the metal hydroxide particles were removed. The resultant was washed with water and dried. In this way, a solid solution powder of nickel hydroxide containing manganese and cobalt was obtained (No.10). The volume basis mean particle size of the powder as determined by a laser-diffraction particle size distribution analyzer was 12.4 μm.

The crystal structure of the nickel hydroxide particles thus obtained was measured by powder X-ray diffraction analysis under the following conditions. FIG. 2 shows a typical powder X-ray diffraction pattern of the nickel hydroxide particles.

Measuring apparatus: Powder X-ray diffractometer "RINT1400" available from Rigaku Corporation
Anticathode: Cu
Filter: Ni
Tube voltage: 40 kV
Tube current: 100 mA
Sampling angle: 0.02 deg.
Scanning speed: 3.0 deg./min.
Divergence slit: 1/2 deg.
Scattering slit: 1/2 deg.

The recorded CuK $\alpha$ X-ray diffraction pattern confirmed that the nickel hydroxide particles were composed of a single phase of $\beta$-$Ni(OH)_2$ in the form of a solid solution containing additional elements of manganese and cobalt.

[Preparation of nickel oxyhydroxide powder]

Next, the nickel hydroxide powder prepared in the above manner was subjected to the following chemical oxidation treatment. The powder was placed into 0.5 mol/liter of a sodium hydroxide aqueous solution, and a sodium hypochlorite aqueous solution (effective chlorine concentration: 12 wt%) was added thereto such that the oxidant equivalent was 1.2. The resultant solution was stirred at a reaction ambient temperature of 45°C for 3 hours to produce nickel oxyhydroxide particles. The particles obtained were fully washed with water and dried at 60°C in a vacuum to obtain a positive electrode active material powder.

The mean valence of nickel in the nickel oxyhydroxide powder obtained was determined by the following measurements.

(i) Measurement of weight ratio of nickel by gravimetric method (dimethylglyoxime method)
A concentrated nitric acid of 10 $cm^3$ was added to 0.05 g of the solid solution powder of nickel oxyhydroxide, which was then heated and dissolved. Further, 10 $cm^3$ of a tartaric acid aqueous solution was added thereto, and ion-exchange water was added thereto so that the whole volume was adjusted to 200 $cm^3$. The pH of this solution was adjusted by using ammonia water and acetic acid, and 1 g of potassium bromate was added thereto to oxidize cobalt ions, which could cause measurement errors, to trivalence. Next, while heating and stirring this solution, an ethanol solution of dimethylglyoxime was added, so that nickel (II) ions were precipitated as a dimethylglyoxime complex compound. Subsequently, the precipitate was collected by suction filtration and then dried in an atmosphere at 110°C. The weight of the resultant precipitate was measured. Using the measured weight, the weight ratio of nickel contained in the active material powder was determined according to the following formula.

$$\text{Weight ratio of nickel} = \{\text{Weight of precipitate (g)} \times 0.2032\} / \{\text{Weight of active material powder sample (g)}\}$$

Also, a nitric acid aqueous solution was added to the solid solution powder of nickel oxyhydroxide, which was then heated and completely dissolved. The resultant solution was quantified by ICP emission spectrometry (using a VISTA-RL available from VARIAN Inc.). By this quantification, the weight ratios of elements contained in the solid solution of nickel oxyhydroxide were determined. Table 1 shows the amounts of elements contained in the solid solution of nickel oxyhydroxide per mole of nickel oxyhydroxide.

(ii) Measurement of nickel ions by oxidation-reduction titration
1 g of potassium iodide and 25 $cm^3$ of sulfuric acid were added to 0.2 g of the solid solution powder of nickel oxyhydroxide, which was sufficiently stirred and completely dissolved. In this process, high-valence nickel, cobalt, and manganese ions oxidized potassium iodide to iodine, while they were reduced to bivalence. The solution of nickel oxyhydroxide was allowed to stand for 20 minutes and then mixed with an acetic acid-ammonium acetate aqueous solution serving as a pH buffer and ion-exchange water to stop the reaction. The free iodine thus obtained was titrated with a 0.1 mol/liter of a sodium thiosulfate aqueous solution. The titer reflects the amount of the above-mentioned metal ions with a valence greater than bivalence. Thus, the mean valence of nickel in each nickel oxyhydroxide powder was determined by using the amount "b" of nickel ions as determined in (ii) and the weight ratios "a" of nickel, cobalt, and manganese as determined in (i), on the assumption that the valence of manganese in nickel oxyhydroxide was 4 and that the valence of cobalt was 3. Table 1 shows the mean valence of nickel in nickel oxyhydroxide.

The nickel oxyhydroxide powder obtained in the above manner, manganese dioxide, graphite, and an electrolyte were blended in a weight ratio of 50:50:6.5:1 and homogeneously stirred and mixed with a mixer to obtain particles with a certain particle size. The particles were molded under pressure into a hollow cylindrical shape to obtain positive electrode mixture pellets, which were used as the positive electrode. Also, a 37 wt% potassium hydroxide aqueous solution was used as the electrolyte.

A gelled negative electrode prepared by mixing a gelling agent, the electrolyte, and a zinc alloy powder was used as the negative electrode. To prepare a zinc alloy powder, zinc was melted by heating to approximately 500°C, and predetermined amounts of Bi, In, and Al were added thereto and melted. The molten material was dropped in the form of narrow streams and atomized (made into a mist) by blowing it with compressed air. In this way, a zinc alloy powder containing 250 ppm of Bi, 250 ppm of In, and 35 ppm of Al was obtained. Sodium polyacrylate was used as the gelling agent, and non-woven fabric composed mainly of polyvinyl alcohol fiber and rayon fiber was used as the separator.

[Production of alkaline dry battery]

Here, an alkaline dry battery with a structure as illustrated in FIG. 1 was produced.
First, a plurality of the positive electrode mixture pellets 3 in the form of a short cylinder were inserted into a positive electrode case 1. The positive electrode mixture pellets 3 were repressed in the positive electrode case 1, so that they closely adhered to the inner face thereof. Subsequently, the separator 4 and an insulating cap 5 were inserted into the space inside the positive electrode mixture pellets 3, and the electrolyte was injected therein. After the injection of the electrolyte, the gelled negative electrode 6 was filled in the space inside the separator 4.

Next, a negative electrode current collector 10, which was integrated with a resin sealing plate 7, a bottom plate 8 serving as a negative electrode terminal, and an insulating washer 9, was inserted into the gelled negative electrode 6. The open edge of the positive electrode case 1 was crimped onto the circumference of the bottom plate 8 with the edge of the sealing plate 7 interposed therebetween, in order to seal the opening of the positive electrode case 1. Lastly, the outer surface of the positive electrode case 1 was covered with an outer label 11. In this way, an alkaline dry battery No. 10 in this example was produced.

Also, alkaline dry batteries of Nos. 2 to 9 and 11 to 27 were produced in the same manner as described above, except that in the preparation of a nickel hydroxide powder, the concentrations of aqueous solutions of nickel sulfate, manganese sulfate, cobalt sulfate, and zinc sulfate were adjusted such that the total metal ion concentration of nickel, manganese, cobalt, and zinc in a solid solution of nickel oxyhydroxide included as a positive electrode active material was constant at 2.68 mol/liter and that the contents of manganese, cobalt, and zinc were the values as shown in Table 1. Note that a nickel hydroxide powder prepared in the same manner as described above by using only a nickel sulfate aqueous solution was used for No.1.

[Evaluation test]

(1) In the initial state and after storage at 60°C for 2 weeks, the batteries produced in the above manner were continuously discharged at 20°C at a constant power of 1 W, and the duration until the voltage reached a cut-off voltage of 0.9 V was measured to evaluate their heavy-load discharge characteristics. (2) To simulate actual use of batteries in digital cameras, the batteries produced in the above manner were subjected to a pulse discharge every one hour in which a pulse cycle of 1.5 W for 2 seconds and 0.65 W for 28 seconds was repeated 10 times, and the number of cycles until the voltage reached 1.05 V and the amount of voltage drop to 1.05 V were measured.

In Table 1, each of the continuous discharge performance and the pulse discharge performance was the average value of 10 batteries which was expressed as an index relative to the duration of each discharge of the battery No. 1 being defined as 100. The duration of continuous discharge of the battery No.1 was 65.2 minutes in the initial state and 50.4 minutes after storage, and the number of cycles in pulse discharge was 172 cycles. To evaluate battery safety, one battery was forcedly short-circuited and the increase in battery temperature was measured with a thermocouple to obtain the highest temperature. Table 1 shows the average value of the highest temperatures of five batteries.

[Table 1]

| No. | NiOOH | | | | | | Continuous discharge performance (Index) | | Intermittent discharge performance | | Highest temperature upon short-circuit (°C) |
|---|---|---|---|---|---|---|---|---|---|---|---|
| | Elements contained ($\times 10^{-2}$ mol) | | | | Particle size ($\mu$m) | Ni valence | Initial state | After storage | Index | $\Delta$V value (mV) | |
| | Mn | Co | Zn | Total | | | | | | | |
| 1 | 0 | 0 | 0 | 0 | 12.3 | 2.99 | 100 | 100 | 100 | 325 | 148 |
| 2 | 0 | 0 | 3 | 3 | 11.8 | 2.97 | 105 | 110 | 102 | 323 | 176 |
| 3 | 0 | 3 | 0 | 3 | 11.9 | 2.98 | 102 | 105 | 122 | 281 | 172 |
| 4 | 3 | 0 | 0 | 3 | 12.3 | 2.99 | 102 | 110 | 95 | 332 | 136 |
| 5 | 5.2 | 0 | 0 | 5.2 | 12.1 | 3.00 | 100 | 110 | 94 | 335 | 132 |
| 6 | 7.5 | 0 | 0 | 7.5 | 11.9 | 2.99 | 99 | 110 | 92 | 338 | 133 |
| 7 | 10 | 0 | 0 | 10 | 12.3 | 2.98 | 99 | 110 | 87 | 341 | 134 |
| 8 | 0 | 2 | 2 | 4 | 12.0 | 2.99 | 104 | 109 | 112 | 312 | 173 |
| 9 | 5.2 | 0.5 | 0 | 5.7 | 12.5 | 2.99 | 102 | 113 | 114 | 309 | 133 |
| 10 | 5.2 | 2 | 0 | 7.2 | 12.4 | 2.98 | 103 | 115 | 117 | 301 | 139 |
| 11 | 5.2 | 3 | 0 | 8.2 | 11.9 | 2.99 | 101 | 107 | 109 | 308 | 158 |
| 12 | 7.5 | 0.5 | 0 | 8 | 11.3 | 3.00 | 102 | 113 | 110 | 308 | 132 |

(continued)

| No. | NiOOH | | | | | | Continuous discharge performance (Index) | | Intermittent discharge performance | | Highest temperature upon short-circuit (°C) |
|---|---|---|---|---|---|---|---|---|---|---|---|
| | Elements contained ($\times 10^{-2}$ mol) | | | | Particle size (μ m) | Ni valence | Initial state | After storage | Index | ΔV value (mV) | |
| | Mn | Co | Zn | Total | | | | | | | |
| 13 | 7.5 | 2 | 0 | 9.5 | 12.4 | 2.98 | 104 | 115 | 112 | 313 | 135 |
| 14 | 7.5 | 3 | 0 | 10.5 | 11.7 | 2.97 | 101 | 104 | 105 | 320 | 156 |
| 15 | 10 | 0.5 | 0 | 10.5 | 12.3 | 2.98 | 99 | 107 | 95 | 334 | 133 |
| 16 | 10 | 2 | 0 | 12 | 12.1 | 2.99 | 98 | 107 | 98 | 323 | 135 |
| 17 | 5.2 | 0 | 0.2 | 5.4 | 11.8 | 2.98 | 104 | 110 | 97 | 329 | 145 |
| 18 | 5.2 | 0 | 2 | 7.2 | 12.4 | 3.00 | 105 | 110 | 98 | 328 | 159 |
| 19 | 7.5 | 0 | 0.2 | 7.7 | 12.1 | 2.98 | 103 | 111 | 97 | 330 | 140 |
| 20 | 7.5 | 0 | 2 | 9.5 | 11.6 | 2.99 | 103 | 112 | 98 | 329 | 153 |
| 21 | 5.2 | 0.5 | 0.2 | 5.9 | 11.7 | 2.98 | 107 | 117 | 115 | 307 | 135 |
| 22 | 5.2 | 2 | 2 | 9.2 | 12.1 | 2.97 | 108 | 119 | 114 | 305 | 138 |
| 23 | 6.2 | 1.2 | 0.6 | 8 | 11.9 | 2.99 | 106 | 120 | 113 | 307 | 136 |
| 24 | 7.5 | 0.5 | 0.2 | 8.2 | 12.5 | 2.99 | 105 | 118 | 112 | 307 | 133 |
| 25 | 7.5 | 2 | 2 | 11.5 | 12.0 | 2.98 | 106 | 116 | 114 | 305 | 140 |
| 26 | 5.2 | 0.5 | 3 | 8.7 | 12.1 | 3.00 | 106 | 113 | 113 | 306 | 158 |
| 27 | 7.5 | 0.5 | 3 | 11 | 11.7 | 2.97 | 105 | 111 | 112 | 305 | 153 |

With respect to each of Nos. 9, 10, 12, and 13 in Table 1, the heavy-load discharge performance in the initial state was better than that of No. 1, and the index after storage was 113 or more. The index of discharge performance in heavy-load pulse discharge was 110 or more. The amount of voltage drop in heavy-load pulse discharge was 313 mV or less, compared with 325 mV of No.1. Also, the highest battery temperature upon a battery short-circuit was 140°C or less, compared with 148°C of No.1. This clearly indicates that the use of a solid solution of nickel oxyhydroxide containing $5.2 \times 10^{-2}$ to $7.5 \times 10^{-2}$ moles of manganese and $0.5 \times 10^{-2}$ to $2.0 \times 10^{-2}$ moles of cobalt per mole of nickel oxyhydroxide provides excellent heavy-load discharge characteristics while suppressing polarization during heavy-load pulse discharge. It is thus clear that the operational stability of digital cameras can be improved, that the number of photos that can be taken by a camera can be significantly increased, and that the heavy-load discharge performance after high-temperature storage is significantly improved. It is also clear that it is possible to obtain a battery in which the increase in battery temperature upon a battery short-circuit is suppressed.

Also, the characteristics of Nos. 21 to 25 indicate that when the active material includes a solid solution of nickel oxyhydroxide further containing $0.2\times10^{-2}$ to $2.0\times10^{-2}$ moles of zinc, it is possible to improve heavy-load discharge characteristics without increasing battery temperature upon a battery short-circuit. However, as is clear from No.26 and 27, when the zinc content exceeds $2.0\times10^{-2}$ moles, the battery temperature upon a short-circuit rises and the safety decreases. This indicates that the zinc content is preferably $0.2\times10^{-2}$ to $0.7\times10^{-2}$ moles per mole of nickel oxyhydroxide.

<<Experimental Example 2>>

Alkaline dry batteries No.28 to 34 and 36 to 42 were produced in the same manner as the battery No. 1 in Experimental Example 1, except that the mixing ratio between nickel oxyhydroxide and manganese dioxide was adjusted such that the ratio of the manganese dioxide was 0 to 90 % with respect to the nickel oxyhydroxide powder No.1 or No. 10. Also, an alkaline dry battery No.35 was produced in the same manner as described above, except that a positive electrode active material was prepared without using nickel oxyhydroxide such that the ratio of manganese dioxide was 100%.

The alkaline dry batteries prepared in the above manner were evaluated in the same manner as in Experimental Example 1. Table 2 shows the evaluation results. Also, FIG. 3 to FIG. 6 show the relation between the ratio of nickel oxyhydroxide in the active material and battery performance. FIG. 3 shows the continuous discharge performance in the initial state, FIG. 4 shows the continuous discharge performance after storage, and FIG. 5 shows the discharge performance in heavy-load pulse discharge, each of which is expressed as an index. FIG. 6 shows the highest temperature upon a battery short-circuit.

[Table 2]

| No. | NiOOH/EMD | Continuous discharge performance (index) | | Intermittent discharge performance | | Highest temperature upon short-circuit (°C) |
|---|---|---|---|---|---|---|
| | | Initial state | after storage | Index | ΔV value (mV) | |
| 28 | 100/0 | 107 | 97 | 103 | 318 | 184 |
| 29 | 90/10 | 103 | 97 | 102 | 320 | 178 |
| 30 | 80/20 | 102 | 99 | 102 | 322 | 164 |
| 31 | 60/40 | 101 | 100 | 100 | 324 | 156 |
| 1 | 50/50 | 100 | 100 | 100 | 325 | 148 |
| 32 | 40/60 | 100 | 101 | 98 | 325 | 146 |
| 33 | 20/80 | 94 | 93 | 91 | 334 | 141 |
| 34 | 10/90 | 87 | 80 | 82 | 348 | 133 |
| 35 | 0/100 | 59 | 46 | 55 | 365 | 125 |
| 36 | 100/0 | 109 | 113 | 123 | 281 | 168 |
| 37 | 90/10 | 105 | 113 | 119 | 293 | 152 |
| 38 | 80/20 | 103 | 113 | 118 | 297 | 147 |
| 39 | 60/40 | 103 | 113 | 118 | 299 | 141 |
| 10 | 50/50 | 103 | 115 | 117 | 301 | 139 |
| 40 | 40/60 | 102 | 113 | 115 | 303 | 134 |
| 41 | 20/80 | 98 | 109 | 110 | 308 | 130 |
| 42 | 10/90 | 95 | 107 | 103 | 320 | 128 |

It can be seen that when a solid solution of nickel oxyhydroxide containing manganese and cobalt is used as a positive electrode active material, the heavy-load continuous discharge performance, the pulse discharge performance, the discharge performance after high-temperature storage, and battery temperature upon a battery short-circuit are significantly improved due to the addition of manganese dioxide.

Also, in comparison with the battery No.35 containing no nickel oxyhydroxide, it can be seen that the batteries No.1 and Nos. 28 to 34 are superior in heavy-load continuous discharge performance and pulse discharge performance, but that the performance gradually lowers when the amount of manganese dioxide added increases. Hence, the effects obtained by the addition of manganese dioxide are an improvement in heavy-load continuous discharge performance after high-temperature storage and a reduction in the temperature rise upon a battery short-circuit.

«Experimental Example 3»

Positive electrode active materials having different mean particle sizes were examined. Alkaline dry batteries No.43 to 48 were produced in the same manner as No. 10 of Experimental Example 1, except that the flow rates of the nickel sulfate aqueous solution, manganese sulfate aqueous solution, cobalt sulfate aqueous solution, ammonia water, and sodium hydroxide aqueous solution were changed to adjust the mean particle size of the resultant solid solution of nickel hydroxide.

The alkaline dry batteries thus produced were evaluated in the same manner as in Experimental Example 1. Table 3 shows the evaluation results.

[Table 3]

| No. | Particle size D50 (μm) | Average valence of Ni | Continuous discharge performance (index) | | Intermittent discharge performance | | Highest temperature upon short-circuit (°C t) |
|---|---|---|---|---|---|---|---|
| | | | Initial state | After storage | Index | ΔV value (mV) | |
| 10 | 12.4 | 2.98 | 103 | 115 | 117 | 301 | 139 |
| 43 | 6.8 | 2.99 | 93 | 95 | 105 | 320 | 126 |
| 44 | 8.2 | 3.00 | 105 | 115 | 119 | 296 | 141 |
| 45 | 11.5 | 2.99 | 103 | 115 | 116 | 301 | 135 |
| 46 | 14.9 | 3.01 | 105 | 116 | 118 | 299 | 137 |
| 47 | 17.8 | 2.98 | 104 | 117 | 115 | 305 | 133 |
| 48 | 21.2 | 2.98 | 94 | 100 | 108 | 315 | 128 |

In the batteries in which the mean particle size of nickel oxyhydroxide was 8 μm to 18 μm, good discharge performance was obtained. Also, it can be seen that when the ean particle size is 8 μm or less or 18 μm or more, the heavy-load discharge performance in the initial state and after high-temperature storage significantly lowers.

<<Experimental Example 4>>

Nickel oxyhydroxide powders having different mean valences of nickel were examined. The nickel hydroxide powder prepared under the conditions of No. 10 of Experimental Example 1 was used and the oxidant equivalent of the sodium hypochlorite aqueous solution (effective chlorine concentration: 12% by weight) was changed from 0.9 to 1.4. Except for this, in the same manner as in Experimental Example 1, alkaline dry batteries No.49 to 54 were prepared. Table 4 shows the mean particle sizes and nickel mean valences of nickel oxyhydroxides used in the alkaline dry batteries No.49 to 54.
The alkaline dry batteries thus produced were evaluated in the same manner as in Experimental Example 1. Table 4 shows the evaluation results.
[Table 4]

| No. | Particle size D50 (μm) | Average valence of Ni | Continuous discharge performance (index) | | Intermittent discharge performance | | Highest temperature upon short-circuit (°C ) |
|---|---|---|---|---|---|---|---|
| | | | Initial state | After storage | Index | ΔV value (mV) | |
| 49 | 12.4 | 3.09 | 89 | 105 | 99 | 329 | 126 |
| 50 | 12.4 | 3.05 | 103 | 115 | 118 | 292 | 135 |
| 51 | 12.4 | 3.01 | 104 | 116 | 117 | 302 | 132 |
| 52 | 12.4 | 2.98 | 104 | 118 | 116 | 303 | 133 |
| 53 | 12.4 | 2.95 | 104 | 114 | 117 | 300 | 129 |
| 54 | 12.4 | 2.91 | 92 | 102 | 102 | 325 | 124 |

In the alkaline dry batteries in which the mean valence of nickel was 2.95 to 3.05, good discharge performance was obtained. It can be seen that at less than 2.95, or more than 3.05, the heavy-load discharge performance in the initial state and after high-temperature storage lowers significantly.

Industrial Applicability

According to the present invention, the polarization of alkaline dry batteries particularly during heavy-load pulse discharge can be suppressed. Thus, the alkaline dry battery of the present invention is useful as the main power source for digital devices such as digital cameras.

## Claims

1. An alkaline dry battery comprising: a positive electrode comprising at least nickel oxyhydroxide and manganese dioxide as positive electrode active materials; a negative electrode comprising zinc or a zinc alloy as a negative electrode active material; a separator interposed between said positive electrode and said negative electrode; a negative electrode current collector inserted in said negative electrode; and an alkaline electrolyte,
   wherein said nickel oxyhydroxide is a solid solution including at least manganese and cobalt,
   the content of said manganese is $5.2\times10^{-2}$ to 7.5×10-2 moles per mole of said nickel oxyhydroxide, and
   the content of said cobalt is $0.5 \times 10^{-2}$ to 2.0×10-$^{2}$ moles per mole of said nickel oxyhydroxide.

2. The alkaline dry battery in accordance with claim 1, wherein nickel contained in said nickel oxyhydroxide has a mean valence of 2.95 or more and 3.05 or less.

3. The alkaline dry battery in accordance with claim 1, wherein said nickel oxyhydroxide has a mean particle size of 8 to 18 μm.

4. The alkaline dry battery in accordance with claim 1, wherein the weight ratio of said nickel oxyhydroxide to said manganese dioxide included in said positive electrode is 10:90 to 80:20.

5. The alkaline dry battery in accordance with claim 1, wherein said nickel oxyhydroxide is a solid solution further including zinc, and
   the content of said zinc is $0.2\times10^{-2}$ to $2.0\times10^{-2}$ moles per mole of said nickel oxyhydroxide.

6. The alkaline dry battery in accordance with claim 1, wherein the weight ratio of said nickel oxyhydroxide to said manganese dioxide included in said positive electrode is 20:80 to 60:40.

FIG. 1

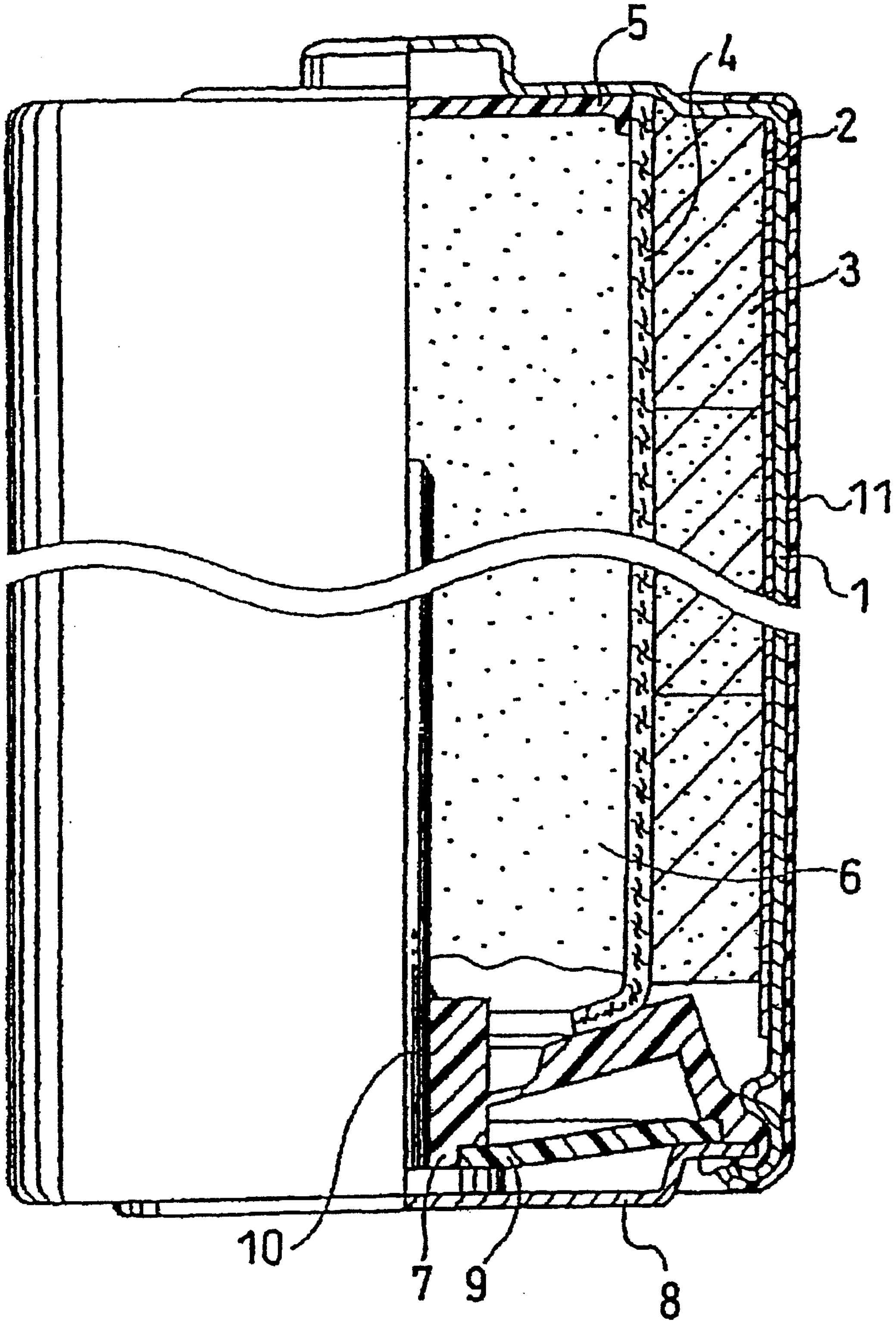

FIG. 2

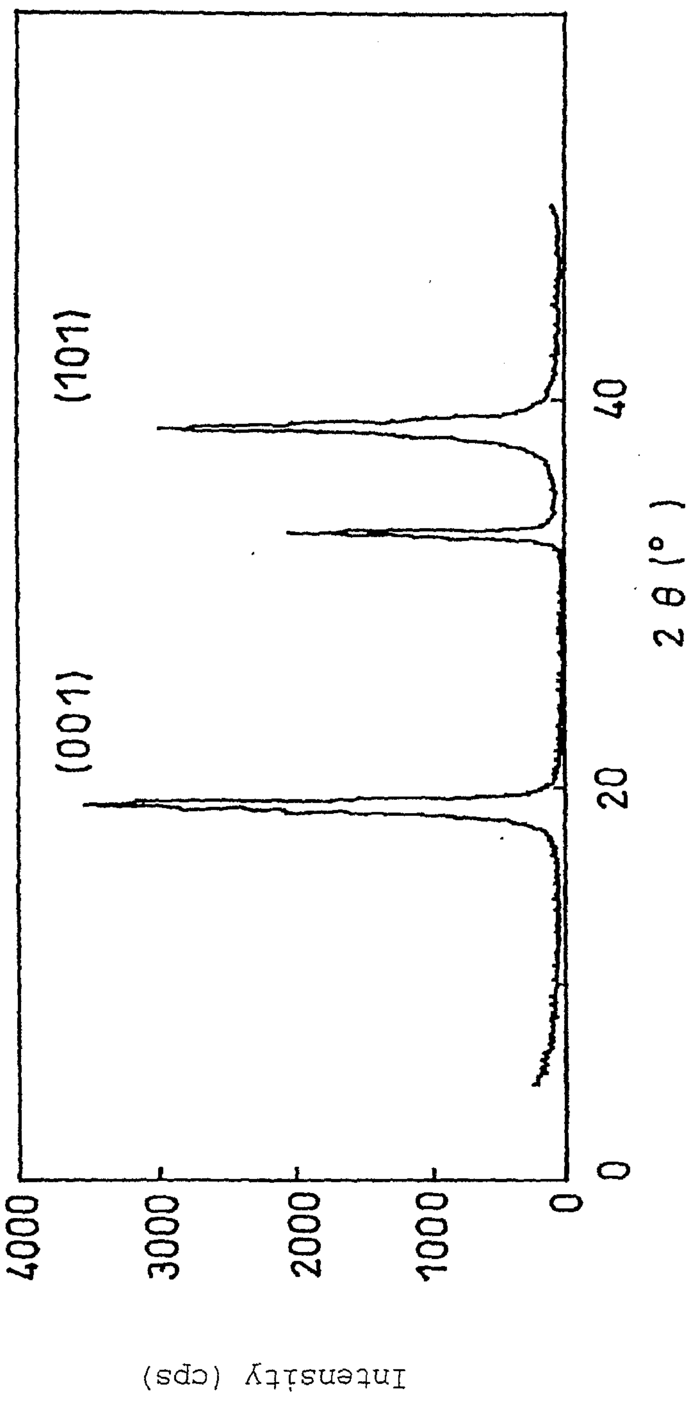

FIG. 3

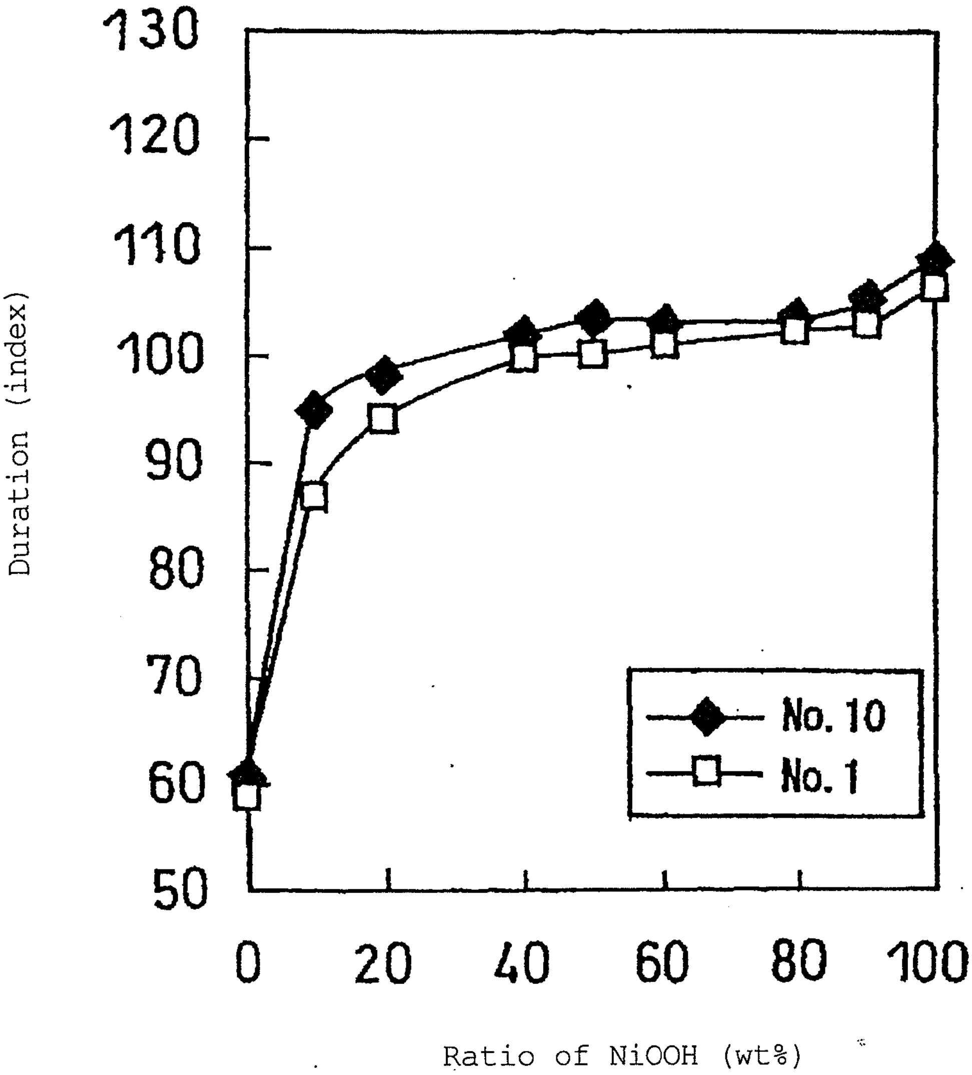
130
120
110
100
90
80
70
60
50
Duration (index)
0
20
40
60
80
100
Ratio of NiOOH (wt%)
No. 10
No. 1

FIG. 4

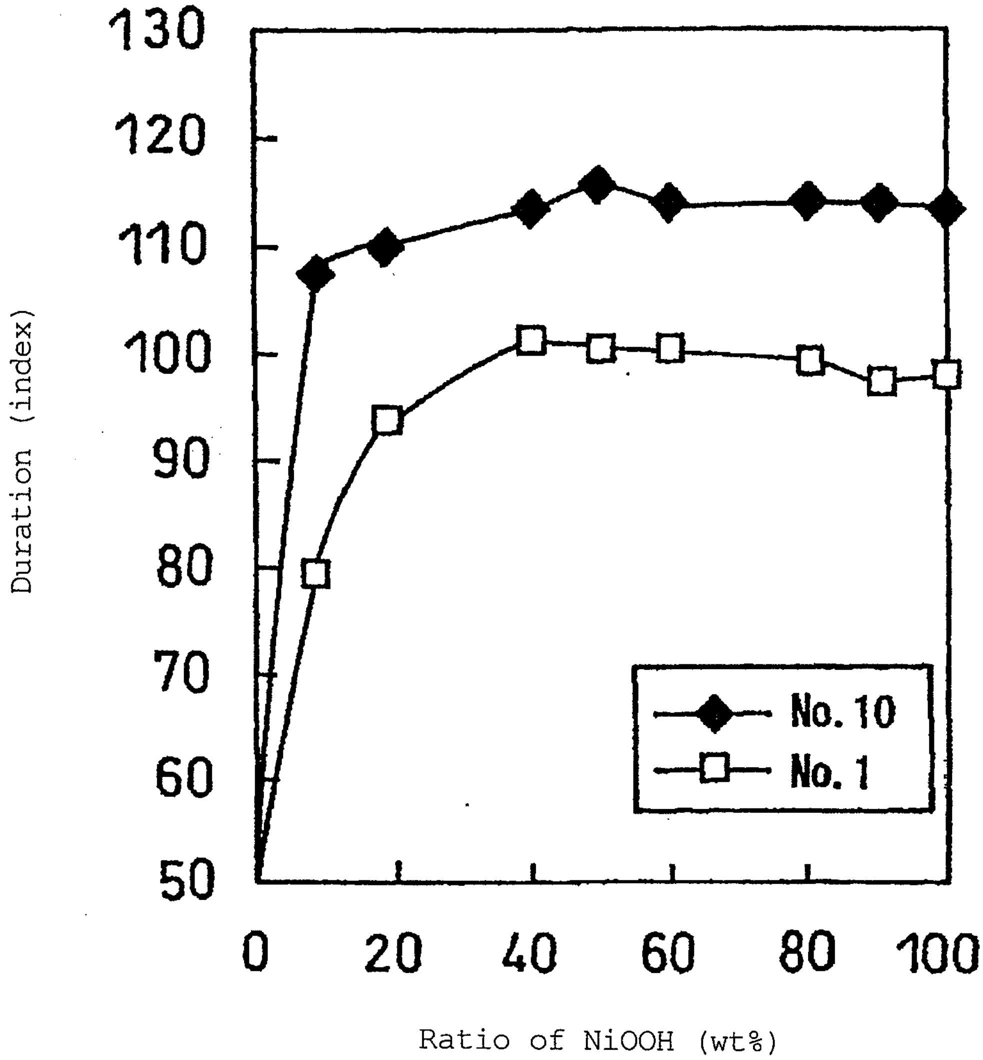
130
120
110
100
90
80
70
60
50
0
20
40
60
80
100
Duration (index)
Ratio of NiOOH (wt%)
No. 10
No. 1

FIG. 5

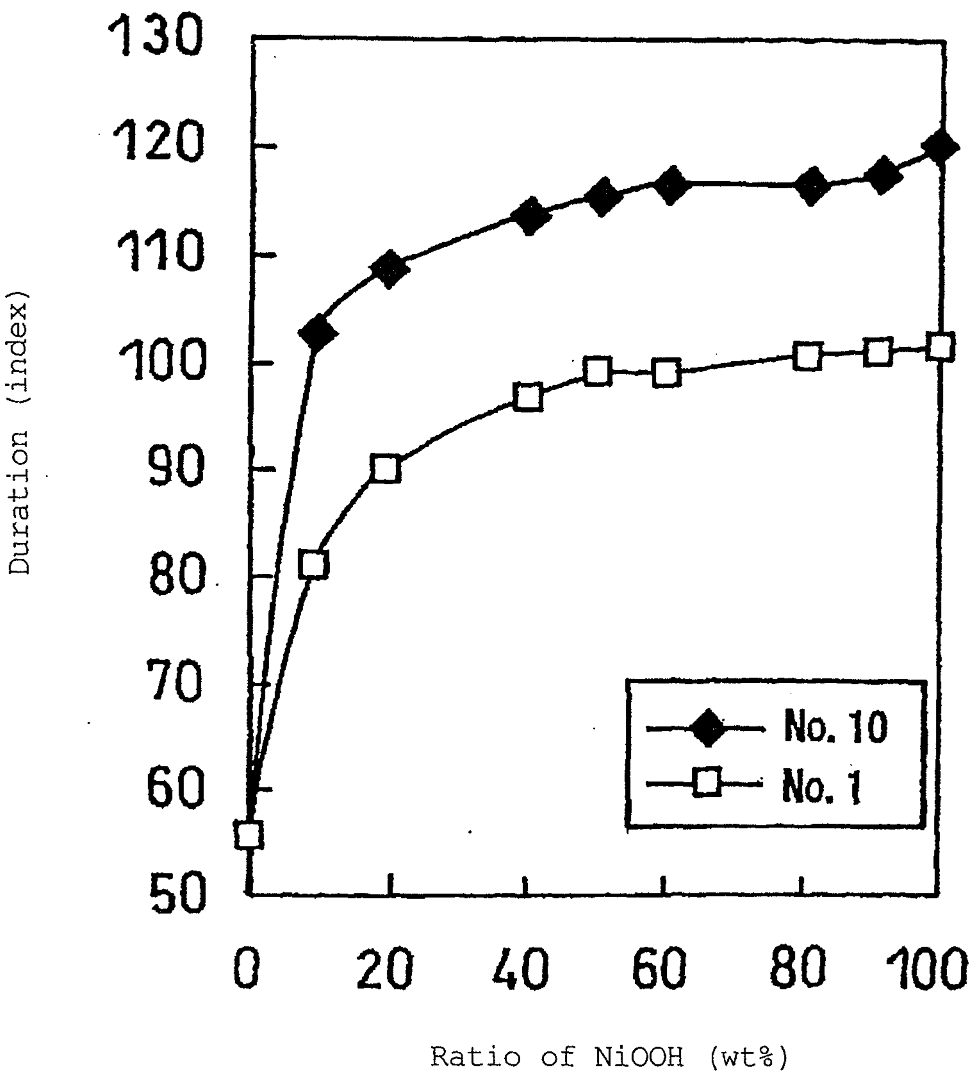
130
120
110
100
90
80
70
60
50
0
20
40
60
80
100
Duration (index)
Ratio of NiOOH (wt%)
No. 10
No. 1

FIG. 6

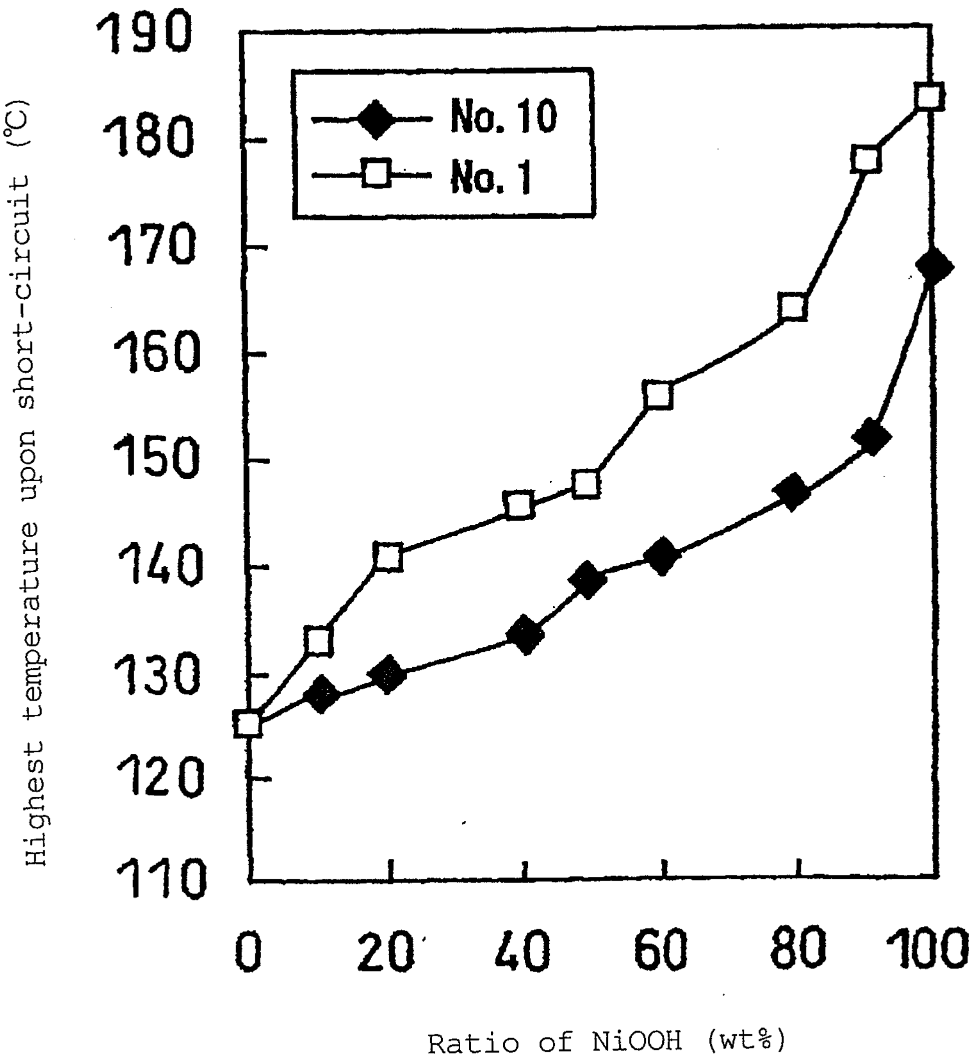
190
180
170
160
150
140
130
120
110
No. 10
No. 1
0
20
40
60
80
100
Highest temperature upon short-circuit (℃)
Ratio of NiOOH (wt%)

**INTERNATIONAL SEARCH REPORT**

International application No.
PCT/JP2006/315586

A. CLASSIFICATION OF SUBJECT MATTER
*H01M4/52*(2006.01)i, *H01M4/06*(2006.01)i, *H01M6/06*(2006.01)i

According to International Patent Classification (IPC) or to both national classification and IPC

B. FIELDS SEARCHED

Minimum documentation searched (classification system followed by classification symbols)
H01M4/52, H01M4/06, H01M6/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2005/045958 A1 (Matsushita Electric Industrial Co., Ltd.), 19 May, 2005 (19.05.05), Par. Nos. [0024], [0034], [0022], [0096] to [0098], [0126] to [0139] (Family: none) | 1,3-4,6<br>2,5 |
| A | JP 2003-234101 A (FDK Kabushiki Kaisha), 22 August, 2003 (22.08.03), Full text (Family: none) | 1-6 |
| A | JP 2005-71991 A (Matsushita Electric Industrial Co., Ltd.), 17 March, 2005 (17.03.05), Full text & WO 2005/015666 A1 | 2,5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 October, 2006 (06.10.06) | 17 October, 2006 (17.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3552194 B
- JP 2002075354 A